# EUROPÄISCHE PATENTSCHRIFT

(11) **EP 2 379 378 B1**
(45) Veröffentlichungstag und Bekanntmachung des Hinweises auf die Patenterteilung: **08.01.2014**
(21) Anmeldenummer: 09752800.4
(22) Anmeldetag: 11.11.2009
(51) Int. Cl.: B60T 7/04, B60T 13/02, B60T 13/12, B60T 13/58

(54) **VERFAHREN ZUR STEUERUNG EINER BREMSBETÄTIGUNG EINES HYBRIDFAHRZEUGS**
METHOD FOR CONTROLLING THE BRAKE ACTIVATION OF A HYBRID VEHICLE
PROCÉDÉ DE COMMANDE D'UN ACTIONNEMENT DE FREIN D'UN VÉHICULE HYBRIDE

(30) Priorität: 18.12.2008 DE 102008054849; 16.06.2009 DE 102009026960
(43) Veröffentlichungstag der Anmeldung: 26.10.2011
(73) Patentinhaber: Robert Bosch GmbH, 70442 Stuttgart (DE)
(72) Erfinder: STRENGERT, Stefan, 70329-Stuttgart (DE); WEIBERLE, Reinhard, 71665 Vaihingen/Enz (DE); JAHNZ, Timo, 74354 Besigheim (DE)
(86) Internationale Anmeldenummer: PCT/EP2009/064964
(87) Internationale Veröffentlichungsnummer: WO 2010/069679

(56) Entgegenhaltungen:
- WO-A1-2007/080106
- DE-A1- 19 912 866
- US-A1- 2003 168 909

## Beschreibung

### Stand der Technik

Die Erfindung betrifft ein Verfahren zur Steuerung einer Bremsbetätigung einer hydraulischen, einen Bremskraftverstärker aufweisenden Fahrzeugbremsanlage eines Kraftfahrzeugs, das eine elektrische Maschine aufweist, mit den Merkmalen des Oberbegriffs des Anspruchs 1. Insbesondere ist die elektrische Maschine ein Elektro-Antriebsmotor des Kraftfahrzeugs, mit dem das Kraftfahrzeug gebremst werden kann, indem der Elektro-Antriebsmotor als Generator betrieben wird.

Es wird hier nicht unterschieden zwischen Steuerung und Regelung, eine Steuerung im Sinne der Erfindung umfasst auch eine Regelung und umgekehrt. Mit Bremsbetätigung ist die Betätigung der Fahrzeugbremsanlage durch einen Fahrzeugführer mit Muskelkraft von Fuß oder Hand gemeint.

Das Kraftfahrzeug kann ein Elektrofahrzeug mit einem Antrieb ausschließlich mit einem Elektro-Antriebsmotor oder auch mit mehreren Elektro-Antriebsmotoren sein. Insbesondere ist die Erfindung vorgesehen für ein Hybridfahrzeug, das einen Verbrennungsmotor und zusätzlich einen Elektro-Antriebsmotor oder mehrere Elektro-Antriebsmotoren aufweist. Zur Rückgewinnung von Energie kann zum Bremsen der Elektro-Antriebsmotor als Generator betrieben werden. Ein Antriebsmoment zum Antrieb des Elektro-Antriebsmotors als Generator verzögert als Bremsmoment das Kraftfahrzeug. Der durch den Generatorbetrieb erzeugte elektrische Strom wird in einem Akkumulator gespeichert und steht zum Antrieb des Kraftfahrzeugs mit dem Elektro-Antriebsmotor zur Verfügung. Grundsätzlich muss die elektrische Maschine kein Elektromotor sein, sondern kann beispielsweise ein Generator sein, mit dem (auch) gebremst wird. Ein solcher Generator kann beispielsweise die Lichtmaschine sein, mit der zum Bremsen bzw. beim Bremsen Strom erzeugt wird.

Eine Bremswirkung der elektrischen Maschine im Generatorbetrieb ist u.a. abhängig von der Fahrzeuggeschwindigkeit und beispielsweise auch vom Ladezustand des Akkumulators, bei vollständig geladenem Akkumulator ist die Bremswirkung nahezu null. Auch bei niedriger Geschwindigkeit ist die Bremswirkung gering und nimmt zum Fahrzeugstillstand hin auf Null ab. Das Abbremsen des Kraftfahrzeugs ist deswegen mit der hydraulischen Fahrzeugbremse und der elektrischen Maschine im Generatorbetrieb gemeinsam erforderlich, wobei der Anteil, den die hydraulische Fahrzeugbremsanlage zur Bremsung beitragen muss, zwischen null und hundert Prozent schwankt. Die Steuerung der Anteile, die der elektrischen Maschine im Generatorbetrieb und die hydraulische Fahrzeugbremsanlage zur Bremswirkung beitragen, wird als "Verblenden" bezeichnet.

Es ist möglich, das "Verblenden" dem Fahrzeugführer zu überlassen, d.h. er passt seine Muskelkraft zur Bremsbetätigung der Bremswirkung der elektrischen Maschine im Generatorbetrieb an.

Eine unverzichtbare Forderung an das Bremsen eines Kraftfahrzeugs mit einer elektrischen Maschine im Generatorbetrieb ist, dass sich der Bremsweg nicht verlängern darf.

Bei elektrohydraulischen Fahrzeugbremsanlagen ist das Verblenden unbemerkt vom Fahrzeugführer vergleichsweise einfach möglich. Elektrohydraulische Fahrzeugbremsanlagen sind Fremdkraft-Bremsanlagen, bei denen die zur Bremsbetätigung erforderliche Energie nicht durch Muskelkraft eines Fahrzeugführers, sondern ausschließlich von einer Fremdenergieversorgungseinrichtung stammt, der Bremsdruck wird von einer Hydropumpe erzeugt. Der Fahrzeugführer gibt an einem Bremspedal einen Sollwert für die Bremskraft vor.

Hydraulische Fahrzeugbremsanlagen sind an sich bekannt und sollen hier nicht näher erläutert werden. Es sind auch hydraulische Fahrzeugbremsanlagen mit einer Radschlupfregelung bekannt, die für jede Radbremse ein Bremsdruckaufbauventil und ein Bremsdruckabsenkventil aufweisen, mit denen ein Radbremsdruck und damit eine Bremskraft der jeweiligen Radbremse zum Zwecke der Schlupfregelung modulierbar, d.h. steuer- bzw. regelbar ist. Es lässt sich sowohl der Radbremsdruck absenken, um ein Blockieren eines Fahrzeugrads beim Bremsen zu vermeiden, als auch ein Radbremsdruck aufbauen, um ein Durchdrehen eines angetriebenen Fahrzeugrades beim Anfahren und/oder Beschleunigen zu vermeiden oder zu begrenzen und es lassen sich auch einzelne Fahrzeugräder gezielt bremsen, um in kritischen Fahrsituationen eine Schleuderneigung zu verringern.

Als üblich anzusehen sind heutzutage Unterdruck-Bremskraftverstärker, deren Aufbau und Funktion bekannt ist und deswegen hier nicht erläutert werden soll. Ein Beispiel eines Unterdruck-Bremskraftverstärkers offenbart die internationale Patentanmeldung WO 2007/080 106 A1. Einen hydraulischen Bremskraftverstärker offenbart die Offenlegungsschrift DE 199 12 866 A1, der eine Hydropumpe voraussetzt. Auch sind elektromechanische Bremskraftverstärker bekannt, die eine Hilfskraft zur Betätigung eines Hauptbremszylinders beispielsweise elektromotorisch oder elektromagnetisch erzeugen. Beispielsweise ist aus der Offenlegungsschrift DE 100 57 557 A1 ein elektromechanischer Bremskraftverstärker mit einem Elektromagneten oder einem Linearmotor zur Erzeugung der Hilfskraft zur Bremsbetätigung bekannt. Wie ein Unterdruck-Bremskraftverstärker übt auch ein elektromechanischer Bremskraftverstärker die von ihm erzeugte Hilfskraft zusätzlich zu einer von einem Fahrzeugführer ausgeübten Muskelkraft auf einen Hauptbremszylinder der Fahrzeugbremsanlage zum Aufbau eines Bremsdrucks aus.

Die Anwendung der Erfindung ist auch für Kraft- oder sonstige Fahrzeuge möglich, die einen Generator aufweisen, der zum Bremsen benutzt wird ohne ein elektrischer Antriebsmotor zu sein.

### Offenbarung der Erfindung

Das erfindungsgemäße Verfahren mit den Merkmalen des Anspruchs 1 ist für den Fall vorgesehen, dass das Kraftfahrzeug durch Betrieb der elektrischen Maschine als Generator gebremst wird. Zunächst soll davon ausgegangen werden, dass das Kraftfahrzeug ausschließlich mit der elektrischen Maschine als Generator gebremst wird, also ohne Betätigung der hydraulischen Fahrzeugbremsanlage. Für diesen Fall sieht das erfindungsgemäße Verfahren vor, mit dem Bremskraftverstärker eine Pedalkraft auf ein Muskelkraftbetätigungselement auszuüben, das zu einer Betätigung des Hauptbremszylinders mit Muskelkraft vorgesehen ist. Bei einer Fußbremse ist das Muskelkraftbetätigungselement normalerweise ein (Fuß-)Bremspedal, bei einer Handbremse ist es normalerweise ein (Hand-)Bremshebel. Ist nachfolgend von einem Bremspedal die Rede, soll darunter allgemein auch ein anderes Muskelkraftbetätigungselement, beispielsweise ein (Hand-)Bremshebel verstanden werden. Die beim Bremsen des Kraftfahrzeugs mit dem Elektro-Antriebsmotor als Generator erfindungsgemäß vom Bremskraftverstärker auf das Muskelkraftbetätigungselement ausgeübte Pedalkraft ist einer auf das Muskelkraftbetätigungselement ausgeübten Muskelkraft eines Fahrzeugführers entgegengerichtet. Die Pedalkraft wirkt entgegen einer Betätigungsrichtung des Hauptbremszylinders. Die Pedalkraft ist also eine vom Bremskraftverstärker erzeugte Kraft, die zur üblichen Betätigungskraft entgegengesetzt ist. Der Bremskraftverstärker übt in diesem Fall keine Kraft auf den Hauptbremszylinder aus. Die Pedalkraft kann auch als Verstärkerkraft bei einem negativen Verstärkungsfaktor des Bremskraftverstärkers aufgefasst werden.

Die Erfindung bewirkt eine Pedalkraft, die ein Fahrzeugführer bei einer Bremsbetätigung als Widerstand zu der von ihm auf das Muskelkraftbetätigungselement ausgeübten Muskelkraft spürt. Sie gibt einem Fahrzeugführer das Gefühl einer üblichen Bremsbetätigung mit steigender Muskelkraft bei länger werdendem Weg des Muskelkraftbetätigungselements, das Bremspedal "fällt nicht durch", auch wenn tatsächlich das Kraftfahrzeug ausschließlich mit dem Elektro-Antriebsmotor als Generator gebremst und die hydraulische Fahrzeugbremsanlage nicht betätigt wird.

Die Unteransprüche haben vorteilhafte Ausgestaltungen und Weiterbildungen der im Anspruch 1 angegebenen Erfindung zum Gegenstand.

Anspruch 3 sieht vor, eine Kraft-/Wegabhängigkeit des Muskelkraftbetätigungselements so zu steuern oder zu regeln, dass sich bei einer Bremsung mit der elektrischen Maschine als Generator dieselbe Kraft-/Wegabhängigkeit wie bei einer Bremsung ohne die Generatorwirkung des Elektro-Antriebsmotors ausschließlich mit der hydraulischen Fahrzeugbremsanlage ergibt. Für den Fahrzeugführer ist die Bremsung durch Generatorbetrieb der elektrischen Maschine des Kraftfahrzeugs dadurch unmerklich. Eine näherungsweise gleiche Kraft-/Wegabhängigkeit am Muskelkraftbetätigungselement bei Bremsung durch Generatorbetrieb der elektrischen Maschine wie bei einer Bremsung ohne den Generatorbetrieb dier elektrischen Maschine ist ausreichend für die Erfindung. Die Kraft-/Wegabhängigkeit des Muskelkraftbetätigungselements wird vielfach auch als Pedalkennlinie bezeichnet.

Anspruch 4 sieht einen Leerweg zwischen dem Muskelkraftbetätigungselement und einem Kolben des Hauptbremszylinders vor. Bei einem Tandemhauptbremszylinder für eine Zweikreis-Bremsanlage ist der Primär- oder Stangenkolben gemeint. Der Leerweg ermöglicht eine Bewegung des Muskelkraftbetätigungselements ohne den Hauptbremszylinder zu betätigen. Das ermöglicht die gewünschte Kraft-/Wegabhängigkeit am Muskelkraftbetätigungselement bei Bremsung durch Generatorbetrieb der elektrischen Maschine des Kraftfahrzeugs und eine Bremsung ausschließlich mit der elektrischen Maschine als Generator ohne Betätigung der hydraulischen Fahrzeugbremsanlage. Die Länge des Leerwegs ist begrenzt damit eine mechanische Muskelkraftbetätigung des Hauptbremszylinders und mit diesem der hydraulischen Fahrzeugbremsanlage bei einer Störung möglich ist. "Mechanisch" meint eine mechanische Übertragung der Muskelkraft vom Muskelkraftbetätigungselement über beispielsweise eine Kolben- und eine Druckstange auf den Kolben des Hauptbremszylinders.

Anspruch 6 sieht einen abschaltbaren Leerweg vor, so dass eine Bremsbetätigung möglich ist, ohne den Leerweg überwinden zu müssen.

Für das erfindungsgemäße Verfahren sind prinzipiell alle steuerbaren Bremskraftverstärker verwendbar, die eine der üblichen Verstärkerkraft entgegengesetzte Kraft erzeugen können, die hier als Pedalkraft bezeichnet wird. Mit "steuerbar" ist gemeint, dass eine Verstärkerkraft des Bremskraftverstärkers unabhängig von der Muskelkraft, mit der er beaufschlagt wird, steuerbar ist. Geeignet für die Erfindung sind elektromechanische Bremskraftverstärker, die die gewünschte Steuerbarkeit konstruktionsbedingt aufweisen. Möglich ist beispielsweise auch die Verwendung eines modifizierten Unterdruck-Bremskraftverstärkers, dessen Unterdruckkammer und dessen Arbeitskammer mit Ventilen, beispielsweise Magnetventilen und wegen der besseren Steuerbarkeit vorzugsweise Proportional-Magnetventilen, belüftbar sind. Durch Belüftung der Arbeitskammer lässt sich die Verstärkerkraft erzeugen und steuern, durch Belüftung der Unterdruckkammer lässt sich die entgegengerichtete Pedalkraft erzeugen und steuern.

Das erfindungsgemäße Verfahren eignet sich besonders für II- und X-Bremskreisaufteilungen.

### Kurze Beschreibung der Zeichnung

Die Erfindung wird nachfolgend anhand einer in der Zeichnung dargestellten Ausführungsform näher erläutert. Es zeigen:
- Figur 1: einen hydraulischen Schaltplan einer hydraulischen Fahrzeugbremsanlage zur Durchführung des erfindungsgemäßen Verfahrens;
- Figur 1a: eine Einzelheit einer Abwandlung der hydraulischen Fahrzeugbremsanlage aus Figur 1; und
- Figur 2: eine Schemadarstellung eines elektromechanischen Bremskraftverstärkers gemäß der Erfindung.

### Ausführungsform der Erfindung

Die in der Zeichnung dargestellte erfindungsgemäße hydraulische Fahrzeugbremsanlage 1 weist eine Schlupfregelung (Blockierschutzregelung ABS; Antriebsschlupfregelung ASR; Fahrdynamikregelung FDR, ESP) auf. Sie ist als Zweikreisbremsanlage mit zwei Bremskreisen I, II ausgebildet, die an einen Hauptbremszylinder 2 angeschlossen sind. Jeder Bremskreis I, II ist über ein Trennventil 3 an den Hauptbremszylinder 2 angeschlossen. Die Trennventile 3 sind in ihrer stromlosen Grundstellung offene 2/2-Wege-Magnetventile. Den Trennventilen 3 ist jeweils ein vom Hauptbremszylinder 2 zu Radbremsen 4 durchströmbares Rückschlagventil 5 hydraulisch parallel geschaltet. An das Trennventil 3 jedes Bremskreis I, II sind die Radbremsen 4 über Bremsdruckaufbauventile 6 angeschlossen. Die Bremsdruckaufbauventile 6 sind in ihrer stromlosen Grundstellung offene 2/2-Wege-Magnetventile. Ihnen sind Rückschlagventile 7 parallel geschaltet, die von den Radbremsen 4 in Richtung zum Hauptbremszylinder 2 durchströmbar sind.

An jede Radbremse 4 ist ein Bremsdruckabsenkventil 8 angeschlossen, die gemeinsam an eine Saugseite einer Hydropumpe 9 angeschlossen sind. Die Bremsdruckabsenkventile 8 sind als in ihrer stromlosen Grundstellung geschlossene 2/2-Wege-Magnetventile ausgebildet. Eine Druckseite der Hydropumpe 9 ist zwischen den Bremsdruckaufbauventilen 6 und den Trennventilen 3 angeschlossen, d. h. die Druckseite der Hydropumpe 9 ist über die Bremsdruckaufbauventile 6 mit den Radbremsen 4 und über das Trennventil 3 mit dem Hauptbremszylinder 2 verbunden. Die Bremsdruckaufbauventile 6 und die Bremsdruckabsenkventile 8 sind wegen der besseren Steuer- und Regelbarkeit Proportionalventile.

Jeder der beiden Bremskreise I, II weist eine Hydropumpe 9 auf, die gemeinsam mit einem Elektromotor 10 antreibbar sind. Die Saugseiten der Hydropumpen 9 sind an die Bremsdruckabsenkventile 8 angeschlossen. Auf der Saugseite der Hydropumpen 9 sind Hydrospeicher 11 zur Aufnahme und Zwischenspeicherung von Bremsflüssigkeit vorhanden, die durch Öffnen der Bremsdruckabsenkventile 8 während einer Schlupfregelung aus den Radbremsen 4 ausströmt.

Die Bremsdruckaufbauventile 6 und die Bremsdruckabsenkventile 8 bilden Radbremsdruckmodulationsventilanordnungen, mit denen bei angetriebener Hydropumpe 9 eine radindividuelle Bremsdruckregelung zur Schlupfregelung in an sich bekannter und hier nicht zu erläuternder Weise möglich ist. Die Trennventile 3 werden bei einer Schlupfregelung geschlossen, d.h. die Fahrzeugbremsanlage 1 wird hydraulisch vom Hauptbremszylinder 2 getrennt.

Durch ein Ansaugventil 25 in jedem Bremskreis I, II ist die Saugseite der Hydropumpe 9 mit dem Hauptbremszylinder 2 verbindbar. Die Ansaugventile 25 sind in ihrer stromlosen Grundstellung geschlossene 2/2-Wege-Magnetventile. Werden Sie geöffnet, saugt die Hydropumpe 9 Bremsflüssigkeit unmittelbar aus dem Hauptbremszylinder 2, wodurch bei unbetätigtem Hauptbremszylinder 2 bzw. druckloser Fahrzeugbremsanlage 1 ein schnellerer Bremsdruckaufbau mit der Hydropumpe 9 möglich ist. Anders als gezeichnet können die Ansaugventile 25 auch an einen auf den Hauptbremszylinder 2 aufgesetzten Bremsflüssigkeitsbehälter 26 anstatt an den Hauptbremszylinder 2 angeschlossen sein. Dadurch erfolgt ein Druckaufbau bei druckloser Fahrzeugbremsanlage 1 noch schneller, weil der Hauptbremszylinder 2 als Strömungswiderstand zwischen dem Bremsflüssigkeitsbehälter 26 und den Ansaugventilen 25 wegfällt.

Das mit der Fahrzeugbremsanlage 1 ausgerüstete Kraftfahrzeug weist einen oder mehrere Elektro-Antriebsmotoren 12 zum Antrieb eines oder mehrer Fahrzeugräder auf. Beispielhaft sind in der Zeichnung zwei Elektro-Antriebsmotoren 12 dargestellt, die zwei Fahrzeugräder einer Fahrzeugachse, im Ausführungsbeispiel die beiden Vorderräder, antreiben. Der Antrieb kann auch mit einem gemeinsamen Elektro-Antriebsmotor erfolgen. Zusätzlich kann ein in der Zeichnung nicht dargestellter Verbrennungsmotor zum Antrieb des Kraftfahrzeugs vorhanden sein, solche Kraftfahrzeuge werden als Hybridfahrzeuge bezeichnet. Die Erfindung ist auch mit anderen elektrischen Maschinen als einem (oder mehereren) Elektro-Antriebsmotor 12 ausführbar, wenn diese im Generatorbetrieb oder in anderer Weise eine Bremsung des Fahrzeugs- oder Kraftfahrzeugs ermöglichen. Beispielsweise kann ein Generator Verwendung finden, beispielsweise eine Lichtmaschine des Fahrzeugs. Beschrieben wird eine Ausführungsform der Erfindung mit einem (oder mehreren) Elektro-Antriebsmotor 12.

Der Hauptbremszylinder 2 weist einen Bremskraftverstärker 13 auf, im Ausführungsbeispiel einen elektromechanischen Bremskraftverstärker 13, der mit Hilfe eines Elektromotors 14 eine Verstärkerkraft erzeugt, die zusammen mit einer Muskelkraft, die über ein Bremspedal 15 aufgebracht wird, den Hauptbremszylinder 2 betätigt. Der symbolisch dargestellte Elektromotor 14 ist in den Bremskraftverstärker 13 integriert. Der Elektromotor 14 kann ein rotatorischer Motor sein, dessen Drehbewegung über ein Getriebe untersetzt und in eine translatorische Bewegung zur Betätigung des Hauptbremszylinders 2 gewandelt wird. Es ist auch eine Ausführung des Bremskraftverstärkers 13 mit einem Elektro-Linearmotor oder einem Elektromagneten möglich. Die Aufzählung ist nicht abschließend. Das Bremspedal 15 kann verallgemeinernd auch als Muskelkraftbetätigungselement aufgefasst werden.

Zur Steuerung oder Regelung der Fahrzeugbremsanlage 1 einschließlich des Bremskraftverstärkers 13 und der Elektro-Antriebsmotoren 12 ist ein elektronisches Steuergerät 16 vorhanden. Mit einem Kraftsensor 17 ist eine auf das Bremspedal 15 ausgeübte Pedalkraft und mit einem Wegsensor 18 eine Stellung und auch eine Geschwindigkeit oder Beschleunigung des Bremspedals 15 messbar.

Bei einer Betätigung des Bremspedals 15 werden die Elektro-Antriebsmotoren 12 als Generatoren betrieben, sofern der Fahrzustand das zulässt, insbesondere die Fahrzeuggeschwindigkeit hoch genug ist. Der erzeugte elektrische Strom wird in einem nicht dargestellten Akkumulator gespeichert. Einen Sollwert für die Bremswirkung gibt eine Stellung bzw. ein Weg des Bremspedals 15 vor, die bzw. der mit dem Wegsensor 18 gemessen wird. Reicht die Bremswirkung der Elektro-Antriebsmotoren 12 aus, um die durch die Stellung des Bremspedals 15 vorgegebene Bremswirkung zu erzielen, wird die hydraulische Fahrzeugbremsanlage 1 nicht betätigt, die Bremsung des Kraftfahrzeugs erfolgt also ausschließlich durch den Generatorbetrieb der Elektro-Antriebsmotoren 12. Eine Pedalkraft am Bremspedal 15 wird mit dem Bremskraftverstärker 13 erzeugt, der eine der üblichen Betätigungsrichtung entgegengesetzte Kraft auf das Bremspedal 15 ausübt, die hier als Pedalkraft bezeichnet wird. Der elektromechanische Bremskraftverstärker 13 wird so gesteuert bzw. geregelt, dass die Pedalkraft in Abhängigkeit von der Stellung des Bremspedals 15 die gleiche ist wie bei einer Bremsung ausschließlich mit der hydraulischen Fahrzeugbremsanlage 1 ohne die Bremswirkung der Elektro-Antriebsmotoren 12 im Generatorbetrieb. Für einen Fahrzeugführer ist dadurch unmerklich, dass die Bremsung des Kraftfahrzeugs ausschließlich mit den Elektro-Antriebsmotoren 12, die als Generatoren betrieben werden, und nicht mit der hydraulischen Fahrzeugbremsanlage 1 erfolgt.

Ist die maximal mögliche Bremswirkung der Elektro-Antriebsmotoren 12 im Generatorbetrieb zu niedrig, d.h. lässt sich die von der Stellung des Bremspedals 15 vorgegebene Bremswirkung nicht durch Generatorbetrieb der Elektro-Antriebsmotoren 12 erzielen, wird zusätzlich die hydraulische Fahrzeugbremsanlage 1 betätigt. Das gilt auch für Fahrzustände, in denen kein Generatorbetrieb der Elektro-Antriebsmotoren 12 gewünscht ist. Beispiele solcher Fahrsituationen sind eine Anfahrhilfe am Berg (Vermeiden eines Rückwärtsrollens durch Fremdenergie-Bremsbetätigung) oder Fahrdynamik- und Schleuderschutzregelungen. Die Betätigung der Fahrzeugbremsanlage 1 erfolgt in üblicher Weise durch Muskelkraft mit dem Bremspedal 15 verstärkt durch die Verstärkerkraft des Bremskraftverstärkers 13, die zur Erhöhung der Muskelkraft entgegen oder zur Verstärkung in der Betätigungsrichtung des Hauptbremszylinders 2 wirkt. Eine Bremskraft der Fahrzeugbremsanlage 1 wird so geregelt, dass sich zusammen mit der Bremswirkung der Elektro-Antriebsmotoren 12 im Generatorbetrieb die Bremswirkung ergibt, die durch die Stellung des Bremspedals 15 vorgegeben ist. Ein Verstärkungsfaktor des Bremskraftverstärkers 13 wird soweit verringert bzw. so geregelt, dass sich am Bremspedal 15 unverändert die Kraft-/Wegabhängigkeit ergibt wie bei einer Bremsung ausschließlich mit der hydraulischen Fahrzeugbremsanlage 1 ohne die Bremswirkung der Elektro-Antriebsmotoren 12 im Generatorbetrieb. Weisen die Elektro-Antriebsmotoren 12 keine Bremswirkung auf, d.h. wenn kein Generatorbetrieb möglich ist, wird das Kraftfahrzeug ausschließlich mit der hydraulischen Fahrzeugbremsanlage 1 gebremst.

Eine Regelung der Bremskraft der Radbremsen 4 ist mit den Bremsdruckaufbauventilen 6 und den Bremsdruckabsenkventilen 8 wie bei einer Blockierschutzregelung möglich.

Eine andere, ebenfalls erfindungsgemäße Möglichkeit zur Erhöhung der Bremswirkung, wenn die Bremswirkung der Elektro-Antriebsmotoren 12 im Generatorbetrieb zu niedrig ist, um die durch die Stellung des Bremspedals 15 vorgegebene Bremswirkung zu erreichen, ist eine Fremdkraftbetätigung der hydraulischen Fahrzeugbremsanlage 1. Dazu werden die Trennventile 3 geschlossen und es wird durch Antrieb der Hydropumpen 9 mit dem Elektromotor 10 ein Bremsdruck aufgebaut und ein Radbremsdruck in den Radbremsen 4 radindividuell mit den Bremsdruckaufbauventilen 6 und den Bremsdruckabsenkventilen 8 geregelt. Bei dieser Fremdkraftbremsung zusätzlich zur Bremsung mit den Elektro-Antriebsmotoren im Generatorbetrieb kann mit dem Bremskraftverstärker 13 eine Pedalkraft erzeugt werden um die übliche Kraft-/Wegabhängigkeit am Bremspedal 15 zu erzeugen, die bei einer Bremsung ausschließlich mit der hydraulischen Fahrzeugbremsanlage 1 besteht.

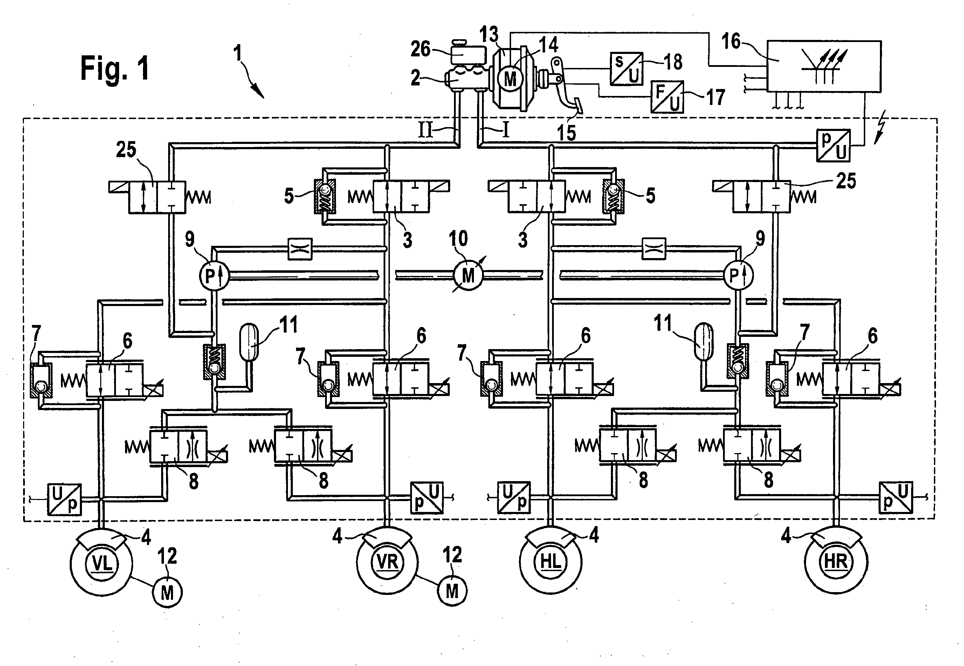

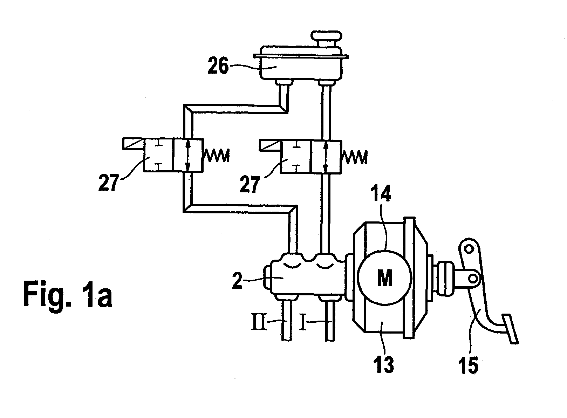

Bei der in Figur 1a dargestellten Abwandlung ist der Bremsflüssigkeitsvorratsbehälter 26 nicht auf den Hauptbremszylinder 2 aufgesetzt, sondern oberhalb angeordnet und über ein weiteres Paar Trennventile 27 mit dem Hauptbremszylinder 2 verbunden. Es ist für jeden Bremskreis I, II ein weiteres Trennventil 27 vorgesehen. Die weiteren Trennventile 27 sind als in ihrer stromlosen Grundstellung offene 2/2-Wege-Magnetventile ausgebildet. Der Anschluss der Fahrzeugbremsanlage 1 an den Hauptbremszylinder 2 ist in Figur 1 a gleich vorgesehen wie in Figur 1, nämlich über die Trennventile 3. Ebenso sind die Ansaugventile 25 vorhanden, die die Saugseiten der Hydropumpen 9 mit dem Hauptbremszylinder 2 oder in nicht dargestellter Weise direkt mit dem Bremsflüssigkeitsvorratsbehälter 26 verbinden. Durch Schließen der Trennventile 27 ist ein Druckaufbau bei unbetätigtem Hauptbremszylinder 2 mit der Hydropumpe 9 möglich. Durch rechtzeitigen Druckaufbau im Hauptbremszylinder 2 beim Übergang vom Bremsen durch Generatorbetrieb des Elektro-Antriebsmotors 12 zu einem Bremsen durch Betätigung des Bremspedals 15 unterstützt durch den Bremskraftverstärker 13 lässt sich ein Drucksprung vermeiden, was ein Pedalgefühl für einen Fahrzeugführer verbessert.

Der elektromechanische Bremskraftverstärker 13 ermöglicht eine leichtere Steuerung oder Regelung des Verstärkungsfaktors als beispielsweise ein Unterdruck-Bremskraftverstärker, weswegen ein elektromechanischer Bremskraftverstärker 13 bevorzugt wird. Ein weiterer Vorteil des elektromechanischen Bremskraftverstärkers 13 ist die Möglichkeit, eine Kraft auf das Bremspedal 15 auszuüben, die der Betätigung des Hauptbremszylinders 2 entgegengerichtet ist. Das kann auch als negativer Verstärkungsfaktor des Bremskraftverstärkers 13 aufgefasst werden. Dadurch ist es möglich, die übliche Pedalkraft am Bremspedal 15 zu erzeugen, wenn die Fahrzeugbremsanlage 1 drucklos ist, weil ausschließlich durch Generatorbetrieb der Elektro-Antriebsmotoren 12 gebremst wird und die hydraulische Fahrzeugbremsanlage 1 unbetätigt ist. Mit üblicher Pedalkraft ist Kraft-/Wegabhängigkeit des Bremspedals 15 gemeint, wenn ausschließlich mit der Fahrzeugbremsanlage 1 gebremst wird. Auch bei einer Fremdkraftbremsung mit Druckaufbau durch die Hydropumpen 9 ohne Wirkung des Hauptbremszylinders 2 kann mit dem Bremskraftverstärker 13 die übliche Pedalkraft am Bremspedal 15 erzeugt werden.

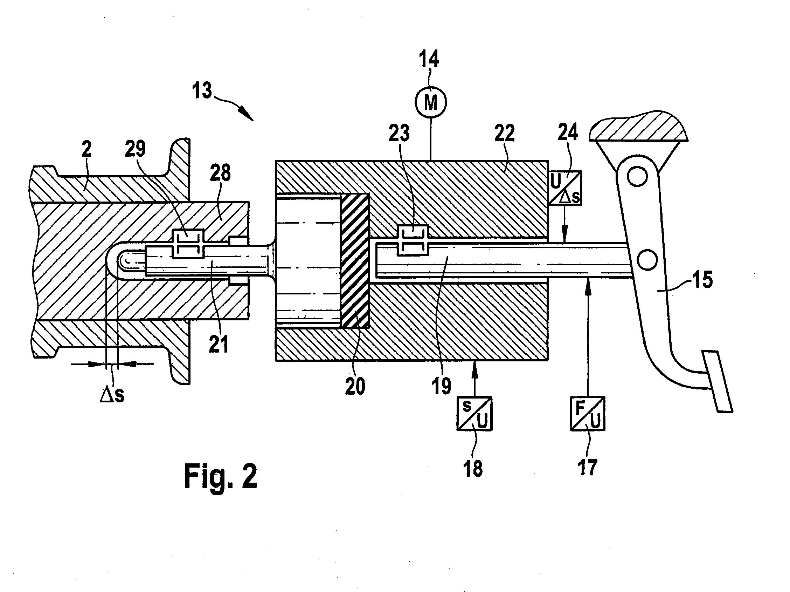

Figur 2 zeigt eine Ausführungsform des elektromechanischen Bremskraftverstärkers 13 in schematisierter, vereinfachter Darstellung. Der Bremskraftverstärker 13 weist eine Kolbenstange 19 auf, die gelenkig mit dem Bremspedal 15 verbunden ist und mit der eine auf das Bremspedal 15 ausgeübte Muskelkraft über eine Reaktionsscheibe 20 auf eine Druckstange 21 übertragbar ist. Die Druckstange 21 beaufschlagt in üblicher Weise einen Kolben des Hauptbremszylinders 2, hier den Primär- oder Stangenkolben 28. Außerdem weist der Bremskraftverstärker 13 einen elektromechanischen Aktuator 22 auf, mit dem ebenfalls über die Reaktionsscheibe 20 eine Verstärkerkraft auf die Druckstange 21 übertragbar ist. Die Verstärkerkraft ist die vom Aktuator 22 erzeugte Kraft. Symbolisch dargestellt zur Krafterzeugung ist der Elektromotor 14, wobei es sich auch um einen Linearmotor handeln kann. Ebenfalls ist eine Verstärkerkrafterzeugung mit einem Elektromagneten möglich (nicht dargestellt). Die Reaktionsscheibe 20 ist ein gummielastischer Körper, der die Muskelkraft von der Kolbenstange 19 und die vom Aktuator 22 erzeugte Verstärkerkraft als Druckkräfte auf die Druckstange 21 überträgt. Eine Kraftübertragung vom Bremskraftverstärker 13 auf den Hauptbremszylinder 2 ist somit nur im Sinne einer Betätigung des Hauptbremszylinders 2 möglich.

Um mit dem Aktuator 22 des Bremskraftverstärkers 13 die weiter oben beschriebene, der Betätigungsrichtung entgegengerichtete Pedalkraft auf die Kolbenstange 19 ausüben zu können, weist der Bremskraftverstärker 13 eine schaltbare Kupplung 23 auf, beispielsweise eine Magnetkupplung. In der in Figur 2 dargestellten Ausführungsform ist mit der Kupplung 23 der Aktuator 22 mit der Kolbenstange 19 verbindbar, so dass eine der Betätigungsrichtung des Hauptbremszylinders 2 entgegengerichtete, in Figur 2 also nach rechts wirkende Kraft vom Aktuator 22 über die Kupplung 23 auf die Kolbenstange 19 ausübbar ist, welche mit dem Bremspedal 15 gelenkig verbunden ist. Die Kupplung 23 ermöglicht die Erzeugung der oben beschriebenen Pedalkraft mit dem Aktuator 22, die der Betätigungsrichtung des Hauptbremszylinders 2 entgegengerichtet ist, wenn die Fahrzeugbremsanlage 1 wegen einer Bremsung durch Generatorbetrieb der Elektro-Antriebsmotoren 12 drucklos ist und folglich der Hauptbremszylinder 2 keine Pedalkraft am Bremspedal 15 bewirkt. Dadurch ist es möglich, die übliche bzw. gewohnte, vom Pedalweg abhängige Pedalkraft zu erzeugen, wenn die Fahrzeugbremsanlage 1 drucklos ist.

In einer nicht dargestellten Ausführungsform kann alternativ zur Positionierung in Figur 2 die Kupplung 23 zwischen Aktuator 22 und Druckstange 21 vorgesehen sein. In dieser Ausgestaltung wird die der Betätigungsrichtung entgegengerichtete Pedalkraft ebenfalls durch den Aktuator 22 erzeugt und über die Reaktionsscheibe 20 auf die Kolbenstange 19 übertragen.

Die Kupplung 23 ist allgemein als ein Element zu verstehen, über das eine Kraft vom Aktuator 22, die einer Betätigungsrichtung des Hauptbremszylinders 2 entgegengerichtet ist, auf die Kolbenstange 19 übertragbar, wenn die Kupplung 23 geschlossen wird. Diese Kraft wird hier als Pedalkraft bezeichnet. Sie wird wie die Verstärkerkraft des Bremskraftverstärkers 13 von dessen Aktuator erzeugt, wirkt jedoch in entgegengesetzter Richtung. Vorzugsweise ist die mit der Kupplung 23 übertragbare Kraft begrenzt, so dass eine Muskelkraftbetätigung des Hauptbremszylinders 2 bei geschlossener Kupplung 23 auch bei blockiertem Aktuator 22 oder bei der Betätigung entgegengerichteter Kraft des Aktuators 22 möglich ist.

Die Kupplung 23 kann unterschiedlich ausgestaltet sein, als ein Beispiel sei eine Kombination aus einem Permanentmagnet und einem Elektromagnet angeführt. Als weitere Ausführung kann die Kupplung 23 ein magneto-rheologischer Dämpfer sein. In dieser Ausführungsform besteht der Dämpfer aus einer Kolben-Zylinder Einheit, wobei eine Komponente dieser Einheit mit dem Aktuator 22 verbunden ist, die andere zum Beispiel mit der Kolbenstange 19. Die beiden durch den Kolben getrennten Kammern des Zylinders weisen eine Verbindung auf, zusätzlich kann die Viskosität der Flüssigkeit und somit das Dämpfungsverhalten des Dämpfers über eine elektrische Ansteuerung eingestellt werden.
In einer weiteren Ausführungsform kann zusätzlich die Verbindung zwischen den zwei Kammern des Zylinders als steuerbares Ventil ausgestaltet sein, mit Hilfe dessen die Dämpfung (bis hin zur Verriegelung) eingestellt werden kann.
In einer weiteren Ausführungsform umfasst die Kupplung 23 ebenfalls eine Kolben-Zylinder Einheit und ein elektrisches ansteuerbares Ventil, allerdings weist der Zylinder nur eine Arbeitskammer auf. Als Flüssigkeit kann Bremsflüssigkeit aus einem Bremsflüssigkeitsvorratsbehälter verwendet werden.
Das elektrisch ansteuerbare Ventil führt je nach Schaltung dazu, dass Volumen mit dem Bremsflüssigkeitsvorratsbehälter ausgetauscht wird und keine Kopplung besteht, oder dass Volumen in der Arbeitskammer der Kolben-Zylinder-Einheit eingesperrt wird und somit Kopplung besteht. Selbstverständlich sind weitere Ausführungsformen der Kupplung 23 denkbar.
Zur Steuerung bzw. Regelung weist der Bremskraftverstärker 13 außer dem Kraftsensor 17 und dem Wegsensor 18 einen Lagesensor 24 auf, mit dem eine Verschiebung der Kolbenstange 19 gegenüber dem Aktuator 22 messbar ist. Die Kupplung 23 ist so ausgeführt, dass sie auch bei einer Verschiebung der Kolbenstange 19 gegenüber dem Aktuator 22 einrückbar ist.

Der Bremskraftverstärker 13 weist bei unbetätigtem Bremspedal 15 einen Abstand zwischen der Druckstange 21 und dem Primär- oder Stangenkolben 28 des Hauptbremszylinders 2 auf. Der Abstand kann auch zwischen dem Aktuator 22 und der Reaktionsscheibe 20 vorgesehen sein. Der Abstand bildet einen Leerweg Δs, um den das Bremspedal 15 bewegbar ist ohne den Stangenkolben 28 zu verschieben. Dadurch lässt sich das Bremspedal 15 bewegen ohne den Hauptbremszylinder 2 zu betätigen. Bei geschlossener Kupplung 23 lässt sich wie erläutert mit dem Aktuator 22 die der Betätigung des Hauptbremszylinders 2 entgegengerichtete Pedalkraft auf das Bremspedal 15 ausüben, ohne dass der Hauptbremszylinder 2 und damit ohne dass die Fahrzeugbremsanlage 1 betätigt wird. Dadurch lässt sich in der oben erläuterten Weise die übliche Kraft-/Wegabhängigkeit am Bremspedal 15 einstellen, wenn das Kraftfahrzeug durch Generatorbetrieb der Elektro-Antriebsmotoren 12 gebremst wird. Vorzugsweise wird kurz vor Überwinden des Leerwegs Δs, also bevor die Druckstange 21 des Bremskraftverstärkers 13 den Stangenkolben 28 des Hauptbremszylinders 2 erreicht, mit der Hydropumpe 9 ein hydraulischer Druck im Hauptbremszylinder 2 aufgebaut. Die Trennventile 27 zwischen dem Bremsflüssigkeitsvorratsbehälter 26 und dem Hauptbremszylinder 2 werden dazu geschlossen. Der aufzubauende Druck entspricht dem Druck, der ohne den Leerweg Δs herrschen würde. Der Fahrzeugführer merkt dadurch nichts vom Übergang vom Bremsen durch Generatorbetrieb des Elektro-Antriebsmotors 12 zum Bremsen mit der Fahrzeugbremsanlage 1.

Um den Leerweg Δs abschalten zu können weist der Bremskraftverstärker 13 eine weitere schaltbare Kupplung 29 auf, mit der die Druckstange 21 des Bremskraftverstärkers 13 mit dem Primär- oder Stangenkolben 28 des Hauptbremszylinders 2 verbindbar ist. Bei geschlossener Kupplung 29 ist der Primär- oder Stangenkolben 28 des Hauptbremszylinders 2 fest mit der Druckstange 21 des Bremskraftverstärkers 13 verbunden und wird vom Bremskraftverstärker 2 ohne Leerweg Δs verschoben. Das ermöglicht einen hydraulischen Druckaufbau in der Fahrzeugbremsanlage 1 ohne dass zuvor der Leerweg Δs überwunden werden muss. Die weitere Kupplung 29 kann wie die Kupplung 23, mit der der Aktuator 22 mit der Kolbenstange 19 verbindbar ist, eine Magnetkupplung sein. Die weitere Kupplung 29 ist ebenfalls als ein Element zu verstehen, über das eine Kraft von der Druckstange 21 des Bremskraftverstärkers 13 auf den Primär- oder Stangenkolben 28 des Hauptbremszylinders 2 übertragbar ist.

## Patentansprüche

1. Verfahren zu Steuerung einer Bremsbetätigung einer hydraulischen Fahrzeugbremsanlage (1) eines Kraftfahrzeugs, das eine elektrische Maschine (12) aufweist, die zum Bremsen des Kraftfahrzeugs als Generator betreibbar ist, wobei die Fahrzeugbremsanlage einen Hauptbremszylinder (2), der mit Muskelkraft über ein Muskelkraftbetätigungselement (15) betätigbar und an den eine Radbremse (4) angeschlossen ist, und einen steuerbaren Bremskraftverstärker (13) aufweist, wobei bei einem Bremsen des Kraftfahrzeugs mit der elektrischen Maschine als Generator (12) der Bremskraftverstärker (13) eine Pedalkraft auf das Muskelkraftbetätigungselement (15) ausübt, die einer von einem Fahrzeugführer auf das Muskelkraftbetätigungselement (15) ausgeübten Muskelkraft entgegengerichtet ist, **dadurch gekennzeichnet, dass** der Bremskraftverstärker (13) bei einer Bremsung des Kraftfahrzeugs mit der elektrischen Maschine (12) als Generator eine Kraft-/Wegabhängigkeit am Muskelkraftbetätigungselement (15) bewirkt, die der Kraft-/Wegabhängigkeit bei einer Bremsung ausschließlich mit der hydraulischen Fahrzeugbremsanlage (1) entspricht.

2. Verfahren nach Anspruch 1, **dadurch gekennzeichnet, dass** die elektrische Maschine ein Elektro-Antriebsmotor (12) ist.

3. Verfahren nach Anspruch 1, **dadurch gekennzeichnet, dass** die Fahrzeugbremsanlage (1) einen Leerweg (Δs) zwischen dem Muskelkraftbetätigungselement (15) und einem Kolben (28) des Hauptbremszylinders (2) aufweist.

4. Verfahren nach Anspruch 3, **dadurch gekennzeichnet, dass** kurz vor Überwinden des Leerwegs (Δs) im Hauptbremszylinder (2) ein hydraulischer Druck aufgebaut wird.

5. Verfahren nach Anspruch 3, **dadurch gekennzeichnet, dass** der Leerweg (Δs) abschaltbar ist.

6. Verfahren nach Anspruch 1, **dadurch gekennzeichnet, dass** die Fahrzeugbremsanlage (1) einen elektromechanischen Bremskraftverstärker (13) aufweist.

7. Verfahren nach Anspruch 1, **dadurch gekennzeichnet, dass** die hydraulische Fahrzeugbremsanlage (1) mit Fremdkraft betätigt wird, wenn eine Bremswirkung der elektrischen Maschine (12) im Generatorbetrieb zu niedrig ist.

8. Verfahren nach Anspruch 1, **dadurch gekennzeichnet, dass** die hydraulische Fahrzeugbremsanlage (1) mit Fremdkraft betätigt wird, wenn ein Generatorbetrieb der elektrischen Maschine (12) nicht erwünscht ist.

9. Verfahren nach Anspruch 1, **dadurch gekennzeichnet, dass** der Hauptbremszylinder (2) mit Muskelkraft und ggf. zusätzlich mit einer Verstärkerkraft des Bremskraftverstärkers (13) betätigt wird, wenn eine Bremswirkung der elektrischen Maschine (12) im Generatorbetrieb zu niedrig ist.

10. Verfahren nach Anspruch 1, **dadurch gekennzeichnet, dass** die Fahrzeugbremsanlage einen Bremsflüssigkeitsvorratsbehälter (26) und ein zweischen dem Bremsflüssigkeitsvorratsbehälter (26) und dem Hauptbremszylinder (2) angeordnetes Trennventil (27) aufweist.

## Claims

1. Method for controlling a brake actuation of a hydraulic vehicle brake system (1) of a motor vehicle that has an electric machine (12) which can be operated as a generator in order to brake the motor vehicle, wherein the vehicle brake system has a master brake cylinder (2), which can be actuated by muscular force via a muscular-force actuation element (15) and to which a wheel brake (4) is connected, and said vehicle brake system has a controllable brake force booster (13), wherein, during a braking operation of the motor vehicle by means of the electric machine as a generator (12), the brake force booster (13) exerts a pedal force on the muscular-force actuation element (15), said pedal force being directed counter to a muscular force exerted on the muscular-force actuation element (15) by a vehicle driver, **characterized in that**, during a braking operation of the motor vehicle by means of the electric machine (12) as a generator, the brake force booster (13) induces at the muscular-force actuation element (15) a force/travel dependency that corresponds to the force/travel dependency during a braking operation exclusively by means of the hydraulic vehicle brake system (1).

2. Method according to Claim 1, **characterized in that** the electric machine is an electric drive motor (12).

3. Method according to Claim 1, **characterized in that** the vehicle brake system (1) has an idle travel (Δs) between the muscular-force actuation element (15) and a piston (28) of the master brake cylinder (2).

4. Method according to Claim 3, **characterized in that**, shortly before the idle travel (As) is overcome, a hydraulic pressure is built up in the master brake cylinder (2).

5. Method according to Claim 3, **characterized in that** the idle travel (As) can be disabled.

6. Method according to Claim 1, **characterized in that** the vehicle brake system (1) has an electromechanical brake force booster (13).

7. Method according to Claim 1, **characterized in that** the hydraulic vehicle brake system (1) is actuated with external force if a braking action of the electric machine (12) in the generator mode is too low.

8. Method according to Claim 1, **characterized in that** the hydraulic vehicle brake system (1) is actuated with external force if a generator mode of the electric machine (12) is not desired.

9. Method according to Claim 1, **characterized in that** the master brake cylinder (2) is actuated with muscular force and if appropriate additionally with a booster force of the brake force booster (13) if a braking action of the electric machine (12) in the generator mode is too low.

10. Method according to Claim 1, **characterized in that** the vehicle brake system has a brake fluid reservoir (26) and an isolation valve (27) arranged between the brake fluid reservoir (26) and the master brake cylinder (2).

## Revendications

1. Procédé de commande d'un actionnement de frein d'une installation de freinage hydraulique de véhicule (1) d'un véhicule automobile, qui présente une machine électrique (12) qui peut fonctionner en tant que générateur pour freiner le véhicule automobile, l'installation de freinage de véhicule présentant un cylindre de freinage principal (2) qui peut être actionné par la force musculaire par le biais d'un élément d'actionnement à force musculaire (15) et auquel est raccordé un frein de roue (4), et un amplificateur de la force de freinage commandable (13), dans lequel, dans le cas d'un freinage du véhicule automobile avec la machine électrique en tant que générateur (12), l'amplificateur de la force de freinage (13) exerce une force de pédale sur l'élément d'actionnement à force musculaire (15), laquelle force de pédale est opposée à une force musculaire exercée par un conducteur du véhicule sur l'élément d'actionnement à force musculaire (15), **caractérisé en ce que** l'amplificateur de la force de freinage (13), dans le cas d'un freinage du véhicule automobile avec la machine électrique (12) en tant que générateur, provoque une dépendance force/distance au niveau de l'élément d'actionnement à force musculaire (15) qui correspond à la dépendance force/distance dans le cas d'un freinage exclusivement avec l'installation de freinage hydraulique de véhicule (1).

2. Procédé selon la revendication 1, **caractérisé en ce que** la machine électrique est un moteur d'entraînement électrique (12).

3. Procédé selon la revendication 1, **caractérisé en ce que** l'installation de freinage de véhicule (1) présente une course à vide (Δs) entre l'élément d'actionnement à force musculaire (15) et un piston (28) du cylindre de freinage principal (2).

4. Procédé selon la revendication 3, **caractérisé en ce que** juste avant de surmonter la course à vide (Δs) dans le cylindre de freinage principal (2), une pression hydraulique est produite.

5. Procédé selon la revendication 3, **caractérisé en ce que** la course à vide (Δs) peut être supprimée.

6. Procédé selon la revendication 1, **caractérisé en ce que** l'installation de freinage de véhicule (1) présente un amplificateur de la force de freinage électromécanique (13).

7. Procédé selon la revendication 1, **caractérisé en ce que** l'installation de freinage hydraulique de véhicule (1) est actionnée par une force extérieure, lorsqu'une action de freinage de la machine électrique (12) en mode de générateur est trop faible.

8. Procédé selon la revendication 1, **caractérisé en ce que** l'installation de freinage hydraulique de véhicule (1) est actionnée par une force extérieure lorsqu'un mode de générateur de la machine électrique (12) n'est pas souhaité.

9. Procédé selon la revendication 1, **caractérisé en ce que** le cylindre de freinage principal (2) est actionné par la force musculaire et éventuellement en outre par une force d'amplification de l'amplificateur de la force de freinage (13) lorsqu'un effet de freinage de la machine électrique (12) en mode de générateur est trop faible.

10. Procédé selon la revendication 1, **caractérisé en ce que** l'installation de freinage de véhicule présente un réservoir de liquide de freinage (26) et une soupape de séparation (27) disposée entre le réservoir de liquide de freinage (26) et le cylindre de freinage principal (2).
